# EUROPEAN PATENT SPECIFICATION

(11) **EP 4 046 830 B1**
(45) Date of publication and mention of the grant of the patent: **08.10.2025**
(21) Application number: 20877741.7
(22) Date of filing: 12.03.2020
(51) Int. Cl.: B60C 23/04, B60C 23/00

(54) **NEAR-FIELD COMMUNICATION-BASED TIRE PRESSURE MONITORING SYSTEM, SENSOR, TIRE, AND VEHICLE**
AUF NAHFELDKOMMUNIKATION BASIERENDES REIFENDRUCKÜBERWACHUNGSSYSTEM, SENSOR, REIFEN UND FAHRZEUG
SYSTÈME DE SURVEILLANCE DE PRESSION DE PNEU BASÉ SUR UNE COMMUNICATION EN CHAMP PROCHE, CAPTEUR, PNEU ET VÉHICULE

(30) Priority: 17.10.2019 CN 201910990350
(43) Date of publication of application: 24.08.2022
(73) Proprietor: Hamaton Automotive Technology Co., Ltd., Hangzhou, Zhejiang 311100 (CN)
(72) Inventor: ZHANG, Jianer, Hangzhou Yuhang Economic Development Area, Yuhang District Hangzhou, Zhejiang 311100 (CN); YU, Mingguang, Hangzhou Yuhang Economic Development Area, Yuhang District Hangzhou, Zhejiang 311100 (CN); MACKEL, Peter, Hangzhou Yuhang Economic Development Area, Yuhang District Hangzhou, Zhejiang 311100 (CN); DING, Haijun, Hangzhou Yuhang Economic Development Area, Yuhang District Hangzhou, Zhejiang 311100 (CN); HU, Zenan, Hangzhou Yuhang Economic Development Area, Yuhang District Hangzhou, Zhejiang 311100 (CN)
(74) Representative: Kutzenberger Wolff & Partner
(86) International application number: PCT/CN2020/078918
(87) International publication number: WO 2021/073030

(56) References cited:
- WO-A1-2018/202334
- CN-A- 103 722 990
- CN-A- 103 921 628
- CN-A- 105 899 378
- CN-A- 105 899 378
- CN-A- 107 351 607
- CN-U- 206 584 203
- JP-A- 2003 165 315
- JP-A- 2014 097 745
- JP-A- 2014 156 147
- KR-A- 20150 071 913
- US-A1- 2016 375 733

## Description

### CROSS-REFERENCE TO RELATED APPLICATION

The present invention claims priority to Chinese Application No. 201910990350.X, filed on October 17, 2019, entitled "Near-Field Communication-Based Tire Pressure Monitoring System, Sensor, Tire, and Vehicle".

### TECHNICAL FIELD

The present invention relates to the technical field of vehicle safety, in particular to a near-field communication-based tire pressure monitoring system, a sensor, a tire and a vehicle.

### BACKGROUND

Tire Pressure Monitoring System (TPMS) refers to an auxiliary system installed on automobile tires for real-time monitoring of tire pressure. By installing a transmitter containing a high-sensitivity sensor chip on each tire, the pressure, temperature and other data of the tire are monitored in real time under driving or stationary conditions, and transmitted to the controller by radio frequency. When the tire leaks or has low pressure, an alarm is made to ensure the driving safety.

Most of the current TPMS sensors are originally installed in the original factory. After improving the TPMS sensors, it is necessary to replace the previous TPMS sensors on the tires with new TPMS sensors, which requires the tire service store to stock a plurality types of original sensors, resulting in inconvenient operation and high cost of replacing the TPMS sensors. Of course, there are also methods that can update the TPMS sensors through wireless communication, but special handheld tools are needed to update the TPMS sensors. The handheld tools are expensive, thus causing an additional economic burden. On the other hand, the wireless communication process is susceptible to interference, which cannot guarantee a smooth TPMS sensors update process.

In a practical application, the inventors found that the update of the existing tire pressure monitoring sensor is interfered by the wireless communication process, and the update process is prone to error interruption.

US20160375733A1 discloses a smart tag assembly designed for mounting on an object to be tracked. The smart tag assembly comprises a multiple layer RFID laminate adapted for electronically storing and processing data, and wireless communicating data when interrogated by an RFID reader. The laminate comprises an RFID inlay including a microchip and antenna formed with a substrate, and laminated between an outside label cover and backing. A low-profile tag carrier defines a recessed pocket designed for receiving and holding the RFID laminate.

JP2014156147A provides a tire condition monitoring device which can properly perform setting change even when the device is operated by a radio communication method. A tire sensor unit comprises an NFC (Near Field Communication) tag. A portable communication terminal comprises an NFC reader/writer which performs short-range radio communication with the NFC tag. The portable communication terminal can transmit a mode change signal to the NFC tag of the tire sensor unit via the NFC reader/writer. When the NFC tag receives the mode change signal, the NFC tag outputs the mode change signal to a sensor unit controller, and the sensor unit controller changes to an operation mode specified by the mode change signal.

JP2003165315A provides a tire internal pressure alarm device capable of securing reliability of transmitted radio waves without lengthening the entire length of an antenna for transmitting radio waves to a receiver on a vehicle body side without increasing the size of the whole of a device. The antenna is constituted by combining at least two parts of an electronic board antenna part, a casing antenna part and a screw part of a valve part.

CN107351607A discloses a tire management system. Through data monitoring modules mounted in all tires, various monitored data of the tires in the travelling process are obtained, then the monitored data and identification information capable of achieving the identification effect on the tires are transmitted to a data sending module in a vehicle, and the data sending module sends the monitored data and the corresponding identification information to a data management module; the data management module conducts sorted storing on the monitored data corresponding to each tire, all the monitored data relevant to one certain tire can be conveniently and rapidly obtained through the data management module, and relevant analysis is advantageously conducted on the tires by combining the data of the tires in all the aspects; or through the data management module, the monitored data of the tires of the multiple vehicles can be obtained, so that the multiple tires and the multiple vehicles are managed in a unified mode.

### SUMMARY

The embodiments of the present invention provide a near-field communication-based tire pressure monitoring system, a sensor, a tire and a vehicle to solve the problem that updating the tire pressure monitoring sensor in the related art is interfered by the wireless communication process and the updating process is prone to error interruption.

In view of the above technical problems, according to a first aspect, the invention provides a near-field communication-based tire pressure monitoring system, including a server, a terminal supporting near-field communication and a tire pressure monitoring sensor supporting the near-field communication; where
the terminal is configured to, after receiving a first request information for updating the tire pressure monitoring sensor, obtain vehicle information of a vehicle where the tire pressure monitoring sensor is located and send the vehicle information to the server;
the server is configured to, after receiving the vehicle information, query updating information corresponding to the vehicle information and send the updating information to the terminal; and
the terminal is further configured to receive the updating information, and after detecting a connection establishing the near-field communication with the tire pressure monitoring sensor, send the updating information to the tire pressure monitoring sensor;
where, the updating information includes configuration information for configuring the tire pressure monitoring sensor or programming information for programming the tire pressure monitoring sensor; and the vehicle information includes vehicle brand and vehicle model.

In an embodiment,
the terminal is further configured to, after detecting the connection establishing the near-field communication with the tire pressure monitoring sensor, and when receiving a second request information of tire pressure monitoring data for monitoring a tire, send the second request information to the tire pressure monitoring sensor; and
the tire pressure monitoring sensor is configured to, after receiving the second request information, send the stored tire pressure monitoring data to the terminal through the connection establishing the near-field communication, for the terminal to display received tire pressure monitoring data.

In an embodiment,
the terminal is further configured to send the received tire pressure monitoring data to the server, for the server to store the received tire pressure monitoring data.

In an embodiment, the terminal is a smart phone or a handheld tablet.

In an embodiment,
the terminal is further configured to, after receiving a third request information uploading the updating information of the vehicle to the server, obtain the updating information and the vehicle information corresponding to the updating information, and send the updating information and the vehicle information corresponding to the updating information to the server; and
the server is further configured to store the received updating information and vehicle information corresponding to the updating information.

In an embodiment, the present invention provides a tire pressure monitoring sensor, including a processor and an antenna for near-field communication;
after the tire pressure monitoring sensor establish a connection of the near-field communication with a terminal, the antenna receives updating information sent by the terminal, and the processor processes the updating information;
where, the updating information including configuration information for configuring the tire pressure monitoring sensor or programming information for programming the tire pressure monitoring sensor.

In an embodiment, the antenna is fixed on a sealing upper cover or a sealing lower cover of the tire pressure monitoring sensor;
the antenna and a main printed circuit board in the processor are conducted by a metal wire through welding, or the antenna and the main printed circuit board in the processor are conducted by a metal contact pin.

The embodiments of the present invention provide a near-field communication-based tire pressure monitoring system, a sensor, a tire and a vehicle. The tire pressure monitoring system includes a server, a terminal supporting near-field communication and a tire pressure monitoring sensor supporting the near-field communication. After the terminal obtains updating information for updating the tire pressure monitoring sensor from the server, the updating information is transmitted to the tire pressure monitoring sensor by establishing a connection of the near-field communication with the terminal and the server, so that the tire pressure monitoring sensor may realize information reconfiguration or programming process. The connection between the terminal and the tire pressure monitoring sensor is established through the near-field communication. Compared with wireless communication, the near-field communication avoids the interference of irrelevant signals and ensures the normal communication process. Since the interference of irrelevant signals is avoided, additional processing messages are not needed to encrypt and prevent errors in the near-field communication process, which reduces the cost.

### BRIEF DESCRIPTION OF DRAWINGS

The drawings needed in the description of the embodiments or the related art are briefly introduced below so that technical solutions of the embodiments of the present invention or related art may be more clearly illustrated. Obviously, the drawings in the following description are only some embodiments of the present invention. For those of ordinary skill in the art, other drawings may also be obtained according to these drawings without paying creative labor.
FIG.1 is a structural diagram of a near-field communication-based tire pressure monitoring system in accordance with an embodiment of the present invention; and
FIG.2 is a circuit block diagram of a tire pressure monitoring sensor in accordance with another embodiment of the present invention.

### DETAILED DESCRIPTION OF EMBODIMENTS

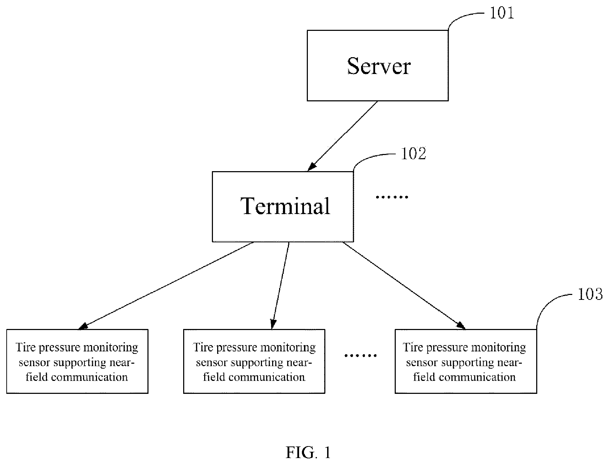

FIG.1 is a structural diagram of a near-field communication-based tire pressure monitoring system in accordance with an embodiment of the present disclosure. Referring to FIG.1, the near-field communication-based tire pressure monitoring system includes a sever 101, a terminal 102 supporting near-field communication, and a tire pressure monitoring sensor 103 supporting near-field communication; where
after receiving a first request information for updating the tire pressure monitoring sensor 103, the terminal 102 obtains vehicle information of a vehicle where the tire pressure monitoring sensor 103 is located and sends the vehicle information to the server 101;
after receiving the vehicle information, the server 101 queries updating information corresponding to the vehicle information and sends the update information to the terminal 102; and
the terminal 102 receives the updating information, and after detecting a connection establishing near-field communication with the tire pressure monitoring sensor 103, the updating information is sent to the tire pressure monitoring sensor 103;
where, the updating information includes configuration information for configuring the pressure monitoring sensor 103 or programming information for programming the tire pressure monitoring sensor 103; and the vehicle information includes vehicle brand, vehicle model, vehicle manufactory year and version number of program in the vehicle.

For a tire pressure monitoring sensor (TPMS sensor) that is configurable or programmable, the updating information of the tire pressure monitoring sensor may be sent to the tire pressure monitoring sensor using wireless communication technology, for example, using low frequency (LF) and radio frequency (RF) wireless communication technology to update the tire pressure monitoring sensor. However, such wireless communication technology is easily interfered when transmitting information. In order to avoid the interference in the process of information transmission and ensure a smooth updating process of tire pressure monitoring sensor , this embodiment provides the tire pressure monitoring system as shown in FIG. 1.

It should be noted that in the method of this embodiment, the terminal is usually a portable device such as a mobile phone or a handheld tablet. The terminal is equipped with an application (APP) that configures or programs the tire pressure monitoring sensor. When it is necessary to configure or program the tire pressure monitoring sensor in a tire of a vehicle, a user opens the APP on the terminal, inputs the vehicle information of the vehicle where the tire pressure monitoring sensor is located through the APP or selects the vehicle information through the APP, and clicks the functional button to obtain the updating information, that is, a request for obtaining updating information matching the vehicle information is sent to the server. The server transmits the updating information queried according to the vehicle information to the terminal. After the terminal receives the updating information, the user only needs to make the terminal close to the tire of the vehicle, so that the near-field communication (NFC) between the terminal and the tire pressure monitoring sensor can be established, the updating information may be transmitted to the tire pressure monitoring sensor. Then the tire pressure monitoring sensor may be configured or programmed according to the updating information received from the terminal.

In the tire pressure monitoring system shown in FIG. 1, both the terminal and the tire pressure monitoring sensor support the near-field communication (NFC), which avoids the interference in the process of updating information transmission. Furthermore, the terminal supporting the near-field communication may be a smart phone or handheld tablet without relying on dedicated handheld tools, which reduces the extra burden of purchasing handheld tools and reduces the cost of updating the tire pressure monitoring sensor. As the background of tire management and monitoring, the server not only stores the updating information of updating the tire pressure monitoring sensor, but also stores the monitoring results of the tire by the tire pressure monitoring sensor. The server and terminal may transmit information remotely through the network, for example, 4G network. Configuration information includes the corresponding protocols and parameters of each vehicle model under each vehicle brand. The first request information is triggered by the user on the terminal through a functional key that indicates an update to the tire pressure monitoring sensor.

As an illustration, an APP is installed in a mobile phone with NFC function, corresponding vehicle information is selected on the APP, and NFC data transmission is employed to achieve the purpose of TPMS sensor configuration or programming. In the near-field communication-based tire pressure monitoring system provided by this embodiment, hardware and software technologies of NFC are embedded into a general TPMS sensor, while it is ensured that other performance indexes of the TPMS sensor after embedding NFC are compatible with those of an original TPMS sensor. In addition, the NFC antenna may be introduced into the tire pressure monitoring sensor provided by this embodiment, while the introduction of the antenna may not interfere with the normal operation of the original LF and RF antenna of the tire pressure monitoring sensor.

This embodiment provides a near-field communication-based tire pressure monitoring system, including a server, a terminal supporting near-field communication and a tire pressure monitoring sensor supporting near-field communication. After the terminal obtains the updating information from the server to update the tire pressure monitoring sensor, the updating information is transmitted to the tire pressure monitoring sensor by establishing a connection establishing the near-field communication between the terminal and the server, so that the tire pressure monitoring sensor may realize information reconfiguration or programming process. The connection between the terminal and the tire pressure monitoring sensor is established through the near-field communication. Compared with wireless communication, the near-field communication avoids the interference of irrelevant signals and ensures the normal communication process. Since the interference of irrelevant signals is avoided, additional processing messages are not needed to encrypt and prevent errors in the near-field communication process, which reduces the cost.

Further, based on the embodiments above, the tire pressure monitoring system further includes:
after detecting the connection establishing the near-field communication with the tire pressure monitoring sensor, and when receiving a second request information for obtaining tire pressure monitoring data for monitoring a tire, the terminal transmits the second request information to the tire pressure monitoring sensor; and
after receiving the second request information, the tire pressure monitoring sensor sends the stored tire pressure monitoring data to the terminal through the connection establishing near-field communication, and the terminal displays the received tire pressure monitoring data.

Further, based on the embodiments above, the tire pressure monitoring system further includes:
the terminal sends the received tire pressure monitoring data to the server, and the server stores the received tire pressure monitoring data.

The tire pressure monitoring sensor may also send the tire pressure monitoring data monitoring the tire to the terminal through NFC. Similarly, the transmission of the tire pressure monitoring data through NFC avoids interference in the data transmission process. The second request information is triggered by the user on the terminal through a functional key that indicates obtaining the tire pressure monitoring data monitoring the tire. The terminal displays the tire pressure monitoring data after receiving the tire pressure monitoring data, and uploads the tire pressure monitoring data to the server to store the tire pressure monitoring data in the server.

This embodiment provides a near-field communication-based tire pressure monitoring system. The tire pressure monitoring sensor sends the tire pressure monitoring data to the terminal through near-field communication transmission, so that the operation of reading and uploading the tire pressure monitoring data to the background is realized without interference of signal transmission.

Further, based on the embodiments above, the terminal is a smart phone or a handheld tablet;
where, after receiving the vehicle information selected by the user through the application installed on the terminal, the terminal sends the vehicle information to the server to obtain the updating information corresponding to the vehicle information from the server. After the terminal establishes the connection of the near-field communication with the tire pressure monitoring sensor, the obtained updating information is sent to the tire pressure monitoring sensor.

When the tire pressure monitoring sensor needs to be configured or programmed, the application installed on the terminal is opened to obtain the updating information, and then the terminal is placed close to the tire. After the NFC is established with the tire pressure monitoring sensor, the updating information may be transmitted to the tire pressure monitoring sensor, so that the configuration and programming process of the tire pressure monitoring sensor may be completed.

This embodiment provides a near-field communication-based tire pressure monitoring system. A smart phone or a handheld tablet is used as the terminal in the tire pressure monitoring system. Through the APP installed on the mobile phone or handheld tablet, the tire pressure monitoring sensor is updated or the tire pressure monitoring data is transmitted, which does not require users to buy special handheld devices and saves costs.

Further, based on the embodiments above, the tire pressure monitoring system further includes:
after receiving a third request information uploading the updating information of the vehicle to the server, the terminal obtains the updating information and the vehicle information corresponding to the updating information, and sends the updating information and the vehicle information corresponding to the updating information to the server; and
the server stores the received updating information and vehicle information corresponding to the updating information;
when receiving a fourth request information for adding new vehicle information and storing the new vehicle information, and after receiving new updating information corresponding to the new vehicle information, the server stores the new updating information and the new vehicle information corresponding to the new updating information.

The updating information of the tire pressure monitoring sensor may be uploaded to the server through the terminal, for example, the configuration information is input through the terminal and is uploaded to the server by the terminal; programming information (for example, upgrading packages for upgrading programs in the tire pressure monitoring sensor) is written through the terminal, and the programming information is uploaded to the server by the terminal. The third request information is triggered by a user on the terminal through a functional key indicating uploading the updating information.

When the new vehicle information appears (for example, a new vehicle model appears), the new vehicle information may be added to the server. That is, developers may upgrade a database of the vehicle information stored in the server, and add or upgrade the vehicle models or data according to market dynamics, so that users may have more choices through the APP.

Specifically, the developers may directly issue fourth request information for adding new vehicle information through the interactive interface of the server, or through the equipment networking with the server. When receiving the fourth request information, the server stores the new vehicle information and the corresponding new updating information. When the user needs to configure or program the pressure monitoring sensor in the new vehicle, the user may access the new updating information through the terminal since the new vehicle information and the corresponding new updating information have been added to the server, so as to configure or program the tire pressure monitoring sensor in the new vehicle.

This embodiment provides a near-field communication-based tire pressure monitoring system, where the operation of uploading the updating information to the server is enabled through the terminal.

Further, the data stored in the server includes TPMS sensor (tire pressure monitoring sensor) transmission protocol, transmission frequency, radio frequency modulation, TPMS sensors pressure data, temperature data, battery level data, speed monitoring data, etc.

Further, the tire pressure monitoring sensor in the near-field communication-based tire pressure monitoring system also supports data transmission through LF and RF.

Specifically, in this embodiment, the RF used by the tire pressure monitoring sensor supporting the near-field communication is in the range of 315 MHz to 433 MHz; the carrier modulation mode of frequency shift key (FSK), amplitude shift key (ASK) or binary off-on key (OOK) is adopted. The communication is with different RF data encodings, and the main data transmission rates are 4.8 K bits, 9.6 K bits and 19.2 K bits.

The LF communication used in the tire pressure monitoring sensor supporting the near-field communication usually adopts 125 KHz carrier, modulation and non-modulation, and the baud rate of data transmission usually adopts 9600 bits.

The NFC used by the tire pressure monitoring sensor supporting the near-field communication in this embodiment is mainly operated at the public frequency band of 13.56 MHz, with the ISO / IEC 18000 - 3 wireless transmission standard, and the data transmission rate is between 106K bits to 424K bits. Therefore, the data transmission rate is 10 to 42 times higher compared with the LF data transmission rate of 9600 bits, greatly improving the communication speed.

Specifically, the near-field communication-based tire pressure monitoring system provided by this embodiment is a system capable of providing human-computer interaction mechanism between TPMS sensor and users.

A method for updating information of the tire pressure monitoring sensor through the near-field communication system provided in this embodiment includes: downloading, by a user, TPMS sensor data of the corresponding model from a mobile phone APP or through the cloud; and based on NFC technology, configuring or programming the obtained sensor data into the TPMS sensor to achieve rapid and reliable product upgrading. In addition, based on NFC communication, reading the corresponding information inside the sensor through mobile phone APP, such as querying the information of the sensor program corresponding to the current vehicle model, ambient temperature, power supply voltage, software and hardware versions, etc.

In a second aspect, the present disclosure provides a tire pressure monitoring sensor, including a processor and an antenna for near-field communication; where
after the tire pressure monitoring sensor establish a connection of the near-field communication with a terminal, the antenna receives updating information sent by the terminal, and the processor processes the updating information;
where, the updating information includes configuration information for configuring the tire pressure monitoring sensor or programming information for programming the tire pressure monitoring sensor.

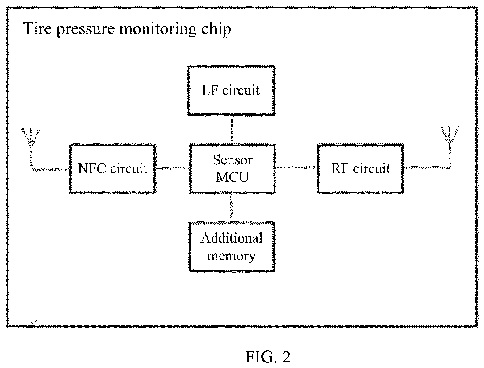

FIG.2 is a circuit block diagram of a tire pressure monitoring sensor in accordance with an embodiment of the present disclosure. Referring to FIG.2, the tire pressure monitoring sensor includes a sensor microprogrammed control unit (MCU), an NFC circuit, an LF circuit, an RF circuit and additional memories. Further, near field data transmission is realized by the NFC circuit and wireless data transmission is realized by the LF circuit and the RF circuit. Specific way of data transmission may be determined according to hardware structure of the terminal. For example, if a terminal supports NFC function, the transmission of updating data is realized through NFC.

This embodiment provides a tire pressure monitoring sensor. By setting the processor and the antenna for near-field communication, the tire pressure monitoring sensor supports the near-field transmission and avoids interference in data transmission with the terminal.

Further, based on the embodiments above, the antenna is fixed on a sealing upper cover or a sealing lower cover of the tire pressure monitoring sensor; and
the antenna and a main printed circuit board in the processor are conducted by a metal wire through welding, or the antenna and the main printed circuit board in the processor are conducted by a metal contact pin.

This embodiment provides a tire pressure monitoring sensor. Without changing the overall layout of the tire pressure monitoring sensor, the tire pressure monitoring sensor is modified in terms of enabling the NFC function.

The present disclosure provides a tire, including a tire pressure monitoring sensor described above, and
the tire pressure monitoring sensor is locked on a valve mouth of the tire or attached to a rubber inner surface of the tire.

The present disclosure provides a vehicle including the tire described above.

Through the near-field communication, data transmission may be realized without signal interference, ensuring the reliability and security of data transmission.

It is provided a near-field communication-based tire pressure monitoring system, a sensor, a tire and a vehicle, which have the following advantages: (1) by using the near-field communication (NFC) communication mechanism and one-to-one transmission, the inherent wireless interference defects of LF or RF is solved, the crosstalk between products is avoided, thereby improving the stability of product transmission; (2) the transmission rate of NFC is 10 to 42 times of the current LF transmission rate, thus the speed is faster when using mobile APP configuration or programming; (3) mobile phone APP may be downloaded online anytime and anywhere, and users may use the APP conveniently; and (4) cloud storage management of corresponding service vehicle model data makes the background update more convenient.

Finally, it should be noted that the above embodiments are only used to illustrate the technical solutions of the present invention, rather than limiting it.

## Claims

1. A near-field communication-based tire pressure monitoring system, comprising a server (101), a terminal (102) supporting near-field communication and a tire pressure monitoring sensor (103) supporting the near-field communication; wherein
the terminal (102) is configured to, after receiving a first request information for updating the tire pressure monitoring sensor (103), obtain vehicle information of a vehicle where the tire pressure monitoring sensor (103) is located and send the vehicle information to the server (101);
the server (101) is configured to, after receiving the vehicle information, query updating information corresponding to the vehicle information and send the updating information to the terminal (102); and
the terminal (102) is further configured to receive the updating information, and after detecting a connection establishing the near-field communication with the tire pressure monitoring sensor (103), send the updating information to the tire pressure monitoring sensor (103);
wherein, the updating information comprises configuration information for configuring the tire pressure monitoring sensor (103) or programming information for programming the tire pressure monitoring sensor (103); and the vehicle information comprises vehicle brand, vehicle model, vehicle manufactory year and version number of program in the vehicle.

2. The system according to claim 1, wherein
the terminal (102) is further configured to, after detecting the connection establishing the near-field communication with the tire pressure monitoring sensor (103), and when receiving a second request information for obtaining tire pressure monitoring data for monitoring a tire, send the second request information to the tire pressure monitoring sensor (103); and
the tire pressure monitoring sensor (103) is configured to, after receiving the second request information, send stored tire pressure monitoring data to the terminal (102) through the connection establishing the near-field communication, for the terminal (102) to display received tire pressure monitoring data.

3. The system according to claim 2, wherein
the terminal (102) is further configured to sends the received tire pressure monitoring data to the server (101), for the server (101) to store the received tire pressure monitoring data.

4. The system according to claim 1, wherein, the terminal (102) is a smart phone or a handheld tablet;
wherein, the terminal (102) is further configured to, after receiving the vehicle information selected by a user through an application installed on the terminal (102), send the vehicle information to the server (101) to obtain the updating information corresponding to the vehicle information from the server (101), and after establishing the connection of the near-field communication with the tire pressure monitoring sensor (103), send the obtained updating information to the tire pressure monitoring sensor (103).

5. The system according to claim 1, wherein
the terminal (102) is further configured to, after receiving a third request information for uploading the updating information of the vehicle to the server (101), obtain the updating information and the vehicle information corresponding to the updating information, and send the updating information and the vehicle information corresponding to the updating information to the server (101);
the server (101) is further configured to store the received updating information and vehicle information corresponding to the updating information; and
the server (101) is further configured to, when receiving a fourth request information for adding new vehicle information, store the new vehicle information, and after receiving new updating information corresponding to the new vehicle information, store the new updating information and the new vehicle information corresponding to the new updating information.

6. The system according to claim 1, wherein the tire pressure monitoring sensor (103) comprises a processor and an antenna for near-field communication, wherein
after the tire pressure monitoring sensor (103) establish a connection of the near-field communication with a terminal, the antenna receives updating information sent by the terminal, and the processor processes the updating information;
wherein, the updating information comprises configuration information for configuring the tire pressure monitoring sensor (103) or programming information for programming the tire pressure monitoring sensor (103).

7. The system according to claim 6, wherein, the antenna is fixed on a sealing upper cover or a sealing lower cover of the tire pressure monitoring sensor (103); and
the antenna and a main printed circuit board in the processor are conducted by a metal wire through welding, or the antenna and the main printed circuit board in the processor are conducted by a metal contact pin.

## Patentansprüche

1. Ein auf Nahfeldkommunikation basierendes Reifendrucküberwachungssystem, das einen Server (101), ein Endgerät (102), das Nahfeldkommunikation unterstützt, und einen Reifendrucküberwachungssensor (103) umfasst, der die Nahfeldkommunikation unterstützt; wobei
das Endgerät (102) dazu konfiguriert ist, nach dem Empfang einer ersten Anforderungsinformation zum Aktualisieren des Reifendrucküberwachungssensors (103) Fahrzeuginformationen eines Fahrzeugs zu erhalten, an dem sich der Reifendrucküberwachungssensor (103) befindet, und die Fahrzeuginformationen an den Server (101) zu senden;
der Server (101) dazu konfiguriert ist, nach dem Empfang der Fahrzeuginformationen die den Fahrzeuginformationen entsprechenden Aktualisierungsinformationen abzufragen und die Aktualisierungsinformationen an das Endgerät (102) zu senden; und
das Endgerät (102) ferner dazu konfiguriert ist, die Aktualisierungsinformationen zu empfangen und nach dem Erkennen einer Verbindung, die die Nahfeldkommunikation mit dem Reifendrucküberwachungssensor (103) herstellt, die Aktualisierungsinformationen an den Reifendrucküberwachungssensor (103) zu senden;
wobei die Aktualisierungsinformationen Konfigurationsinformationen zum Konfigurieren des Reifendrucksensors (103) oder Programmierinformationen zum Programmieren des Reifendrucksensors (103) umfassen; und die Fahrzeuginformationen die Fahrzeugmarke, das Fahrzeugmodell, das Fahrzeugbaujahr und die Versionsnummer des Programms im Fahrzeug umfassen.

2. System nach Anspruch 1, wobei
das Endgerät (102) ferner dazu konfiguriert ist, nach dem Erfassen der Verbindung, die die Nahfeldkommunikation mit dem Reifendrucküberwachungssensor (103) herstellt, und beim Empfangen einer zweiten Anforderungsinformation zum Erhalten von Reifendrucküberwachungsdaten zum Überwachen eines Reifens, die zweite Anforderungsinformation an den Reifendrucküberwachungssensor (103) zu senden; und
der Reifendrucküberwachungssensor (103) dazu konfiguriert ist, nach dem Empfang der zweiten Anforderungsinformation gespeicherte Reifendrucküberwachungsdaten über die Verbindung, die die Nahfeldkommunikation herstellt, an das Endgerät (102) zu senden, damit das Endgerät (102) die empfangenen Reifendrucküberwachungsdaten anzeigt.

3. System nach Anspruch 2, wobei
das Endgerät (102) ferner dazu konfiguriert ist, die empfangenen Reifendrucküberwachungsdaten an den Server (101) zu senden, damit der Server (101) die empfangenen Reifendrucküberwachungsdaten speichert.

4. System nach Anspruch 1, wobei das Endgerät (102) ein Smartphone oder ein Handheld-Tablet ist;
wobei das Endgerät (102) ferner dazu konfiguriert ist, nach dem Empfang der von einem Benutzer über eine auf dem Endgerät (102) installierte Anwendung ausgewählten Fahrzeuginformationen, die Fahrzeuginformationen an den Server (101) zu senden, um die den Fahrzeuginformationen entsprechenden Aktualisierungsinformationen vom Server (101) zu erhalten, und nach dem Herstellen der Nahfeldkommunikationsverbindung mit dem Reifendrucküberwachungssensor (103) die erhaltenen Aktualisierungsinformationen an den Reifendrucküberwachungssensor (103) zu senden.

5. System nach Anspruch 1, wobei
das Endgerät (102) ferner dazu konfiguriert ist, nach dem Empfang einer dritten Anforderungsinformation zum Hochladen der Aktualisierungsinformationen des Fahrzeugs an den Server (101), die Aktualisierungsinformationen und die den Aktualisierungsinformationen entsprechenden Fahrzeuginformationen zu erhalten und die Aktualisierungsinformationen und die den Aktualisierungsinformationen entsprechenden Fahrzeuginformationen an den Server (101) zu senden;
der Server (101) ferner dazu konfiguriert ist, die empfangenen Aktualisierungsinformationen und die den Aktualisierungsinformationen entsprechenden Fahrzeuginformationen zu speichern; und
der Server (101) ferner dazu konfiguriert ist, bei Empfang einer vierten Anforderungsinformation zum Hinzufügen neuer Fahrzeuginformationen die neuen Fahrzeuginformationen zu speichern und nach Empfang neuer Aktualisierungsinformationen, die den neuen Fahrzeuginformationen entsprechen, die neuen Aktualisierungsinformationen und die neuen Fahrzeuginformationen, die den neuen Aktualisierungsinformationen entsprechen, zu speichern.

6. System nach Anspruch 1, wobei der Reifendrucksensor (103) einen Prozessor und eine Antenne für die Nahfeldkommunikation umfasst, wobei
nachdem der Reifendrucksensor (103) eine Verbindung für die Nahfeldkommunikation mit einem Endgerät hergestellt hat, die Antenne die vom Endgerät gesendeten Aktualisierungsinformationen empfängt und der Prozessor die Aktualisierungsinformationen verarbeitet;
wobei die Aktualisierungsinformationen Konfigurationsinformationen zum Konfigurieren des Reifendrucküberwachungssensors (103) oder Programmierinformationen zum Programmieren des Reifendrucküberwachungssensors (103) umfassen.

7. System nach Anspruch 6, wobei die Antenne an einer oberen Dichtungsabdeckung oder einer unteren Dichtungsabdeckung des Reifendrucküberwachungssensors (103) befestigt ist; und
die Antenne und eine Hauptleiterplatte im Prozessor durch Schweißen mit einem Metalldraht verbunden sind oder die Antenne und die Hauptleiterplatte im Prozessor durch einen Metallkontaktstift verbunden sind.

## Revendications

1. Système de surveillance de pression de pneu basé sur une communication en champ proche, comprenant un serveur (101), un terminal (102) prenant en charge une communication en champ proche et un capteur de surveillance de pression de pneu (103) prenant en charge la communication en champ proche ; dans lequel
le terminal (102) est configuré pour, après réception de premières informations de demande de mise à jour du capteur de surveillance de pression de pneu (103), obtenir des informations de véhicule d'un véhicule dans lequel le capteur de surveillance de pression de pneu (103) est situé et envoyer les informations de véhicule au serveur (101) ;
le serveur (101) est configuré pour, après réception des informations de véhicule, interroger des informations de mise à jour correspondant aux informations de véhicule et envoyer les informations de mise à jour au terminal (102) ; et
le terminal (102) est en outre configuré pour recevoir les informations de mise à jour et, après détection d'une connexion établissant la communication en champ proche avec le capteur de surveillance de pression de pneu (103), envoyer les informations de mise à jour au capteur de surveillance de pression de pneu (103) ;
dans lequel les informations de mise à jour comprennent des informations de configuration pour configurer le capteur de surveillance de pression de pneu (103) ou des informations de programmation pour programmer le capteur de surveillance de pression de pneu (103) ; et les informations de véhicule comprennent la marque du véhicule, le modèle du véhicule, l'année de fabrication du véhicule et le numéro de version du programme dans le véhicule.

2. Système selon la revendication 1, dans lequel le terminal (102) est en outre configuré pour, après détection de la connexion établissant la communication en champ proche avec le capteur de surveillance de pression de pneu (103), et lors de la réception de deuxièmes informations de demande d'obtention de données de surveillance de pression de pneu pour surveiller un pneu, envoyer les secondes informations de demande au capteur de surveillance de pression de pneu (103) ; et le capteur (103) de surveillance de pression de pneu est configuré pour, après réception des deuxièmes informations de demande, envoyer des données de surveillance de pression de pneu stockées au terminal (102) par l'intermédiaire de la connexion établissant la communication en champ proche, afin que le terminal (102) affiche les données de surveillance de pression de pneu reçues.

3. Système selon la revendication 2, dans lequel le terminal (102) est en outre configuré pour envoyer les données de surveillance de pression de pneu reçues au serveur (101), afin que le serveur (101) stocke les données de surveillance de pression de pneu reçues.

4. Système selon la revendication 1, dans lequel le terminal (102) est un téléphone intelligent ou une tablette portable ;
dans lequel le terminal (102) est en outre configuré pour, après réception des informations de véhicule sélectionnées par un utilisateur par l'intermédiaire d'une application installée sur le terminal (102), envoyer les informations de véhicule au serveur (101) pour obtenir les informations de mise à jour correspondant aux informations de véhicule du serveur (101), et après établissement de la connexion de la communication en champ proche avec le capteur de surveillance de pression de pneu (103), envoyer les informations de mise à jour obtenues au capteur de surveillance de pression de pneu (103).

5. Système selon la revendication 1, dans lequel
le terminal (102) est en outre configuré pour, après réception de troisièmes informations de demande de téléchargement des informations de mise à jour du véhicule vers le serveur (101), obtenir les informations de mise à jour et les informations de véhicule correspondant aux informations de mise à jour, et envoyer les informations de mise à jour et les informations de véhicule correspondant aux informations de mise à jour au serveur (101) ;
le serveur (101) est en outre configuré pour stocker les informations de mise à jour et les informations de véhicule reçues correspondant aux informations de mise à jour ; et
le serveur (101) est en outre configuré pour, lors de la réception de quatrièmes informations de demande d'ajout de nouvelles informations de véhicule, stocker les nouvelles informations de véhicule, et après réception de nouvelles informations de mise à jour correspondant aux nouvelles informations de véhicule, stocker les nouvelles informations de mise à jour et les nouvelles informations de véhicule correspondant aux nouvelles informations de mise à jour.

6. Système selon la revendication 1, dans lequel le capteur de surveillance de pression de pneu (103) comprend un processeur et une antenne pour la communication en champ proche, dans lequel
après que le capteur de surveillance de pression de pneu (103) a établi une connexion de la communication en champ proche avec un terminal, l'antenne reçoit des informations de mise à jour envoyées par le terminal, et le processeur traite les informations de mise à jour ;
dans lequel les informations de mise à jour comprennent des informations de configuration pour configurer le capteur de surveillance de pression de pneu (103) ou des informations de programmation pour programmer le capteur de surveillance de pression de pneu (103).

7. Système selon la revendication 6, dans lequel l'antenne est fixée sur un couvercle supérieur d'étanchéité ou un couvercle inférieur d'étanchéité du capteur de surveillance de pression de pneu (103) ; et l'antenne et une carte de circuit imprimé principale dans le processeur sont connectées par un fil métallique par soudage, ou l'antenne et la carte de circuit imprimé principale dans le processeur sont connectées par une broche de contact métallique.
